# FASCICULE DE BREVET EUROPEEN

(11) **EP 2 912 594 B1**
(45) Date de publication et mention de la délivrance du brevet: **10.04.2019**
(21) Numéro de dépôt: 13779300.6
(22) Date de dépôt: 25.09.2013
(51) Int. Cl.: G06F 21/30

(54) **PROCÉDÉ DE FOURNITURE D'UN SERVICE SÉCURISÉ**
VERFAHREN ZUR BEREITSTELLUNG EINES GESICHERTEN DIENSTES
METHOD OF PROVIDING A SECURED SERVICE

(30) Priorité: 26.10.2012 FR 1260227
(43) Date de publication de la demande: 02.09.2015
(73) Titulaire: Inside Secure, 13590 Meyreuil (FR)
(72) Inventeur: CHEW, Gary, 13090 Aix En Provence (FR); GAGNEROT, Georges, F-13011 Marseille (FR); GREZES, Jean-François, F-13005 Marseille (FR)
(74) Mandataire: de Roquemaurel, Bruno
(86) Numéro de dépôt international: PCT/FR2013/052255
(87) Numéro de publication internationale: WO 2014/064353

(56) Documents cités:
- WO-A1-2009/007653
- US-A1- 2012 144 202
- MENEZES A J ET AL: "HANDBOOK OF APPLIED CRYPTOGRAPHY, MOTIVATION FOR USE OF SESSION KEYS, KEY TRANSPORT BASED ON PUBLIC-KEY ENCRYPTION, HYBRID KEY TRANSPORT PROTOCOLS USING PK ENCRYPTION", 1 January 1997 (1997-01-01), HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 494,506 - 507,512, XP002510620, ISBN: 978-0-8493-8523-0
- MENEZES A J ET AL: "HANDBOOK OF APPLIED CRYPTOGRAPHY", 1 January 1997 (1997-01-01), HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 79 - 85,452/453,515, XP002948869, ISBN: 978-0-8493-8523-0

## Description

La présente invention concerne la réalisation de transactions sécurisées ou la fourniture de services sécurisés, par l'intermédiaire d'un élément sécurisé tel qu'un processeur sécurisé. L'élément sécurisé peut être connecté ou embarqué dans un dispositif hôte, de type téléphone mobile ou équivalent, ou ordinateur. L'élément sécurisé peut comprendre un processeur sécurisé comme une carte SIM (Subscriber Identity Module), une carte micro-SD (micro Secure Digital card), un module UICC ("Universal Integrated Circuit Card"), ou plus généralement une carte à circuit intégré conforme notamment à la norme ISO 7816. L'élément sécurisé peut également consister simplement en un environnement sécurisé mis en oeuvre par un processeur, comme "Trusted Execution Environment" conforme notamment à la norme GlobalPlatform.

La conduite d'une transaction ou la fourniture d'un service utilisant un élément sécurisé nécessite généralement l'installation dans le dispositif hôte d'une application qui fait appel à l'élément sécurisé lorsqu'une opération sécurisée doit être effectuée.

Cependant, comme le dispositif hôte n'est pas sécurisé, une application installée dans le dispositif hôte peut être conçue pour engager des attaques contre l'élément sécurisé, visant notamment à découvrir des informations secrètes stockées ou manipulées par l'élément sécurisé. De telles attaques peuvent aussi viser à réaliser des transactions à l'insu du titulaire de l'élément sécurisé.

Pour s'affranchir de ces risques, il apparaît souhaitable de pouvoir s'assurer qu'une application tentant d'accéder à l'élément sécurisé soit autorisée à effectuer un tel accès. Une fois qu'une application dispose d'un accès à l'élément sécurisé, il est également souhaitable de s'assurer que d'autres applications n'utilisent pas l'autorisation d'accès attribuée à l'application.

A cet effet, le standard JSR 177 (Java Spécification Request) a été développé pour proposer une interface de communication standardisée entre un téléphone mobile et un processeur sécurisé dans le but de sécuriser l'échange et le stockage de données telles que les données échangées durant une transaction, et d'identifier et d'authentifier l'utilisateur lors de l'échange de données avec des tierces parties. Le standard JSR 177 comporte un mécanisme de contrôle d'accès permettant à une application susceptible d'être authentifiée d'accéder à des informations stockées dans l'élément sécurisé. A la réception d'une requête d'accès émise par l'application, le mécanisme de contrôle d'accès mis en oeuvre par le système d'exploitation du dispositif hôte accède à des données de contrôle d'accès stockées par l'élément sécurisé, et authentifie l'application à l'aide de ces données de contrôle d'accès.

JSR 177 présente donc l'inconvénient de laisser au système d'exploitation (non sécurisé) du dispositif hôte la fonction de contrôle d'accès. Il existe donc un risque que le système d'exploitation soit modifié de manière frauduleuse pour désactiver ou modifier le mécanisme de contrôle d'accès.

Par ailleurs, chaque type de dispositif hôte présente son propre système d'exploitation qui implémente son propre mécanisme de contrôle d'accès. Il en résulte que le mécanisme de contrôle d'accès doit être adapté à de nombreux systèmes d'exploitation différents. Par ailleurs, à chaque fois que ce mécanisme est modifié, chaque système d'exploitation mettant en oeuvre ce mécanisme doit également être modifié.

Il est donc souhaitable d'améliorer la robustesse des mécanismes de contrôle d'accès à un élément sécurisé par des applications installées dans un dispositif hôte. Il est également souhaitable de ne pas avoir à modifier les systèmes d'exploitation susceptibles d'équiper les dispositifs hôte existants pour mettre en oeuvre un tel mécanisme.

Des modes de réalisation concernent un procédé d'exécution par un élément sécurisé d'une commande transmise par un processeur non sécurisé d'un terminal mobile dans lequel l'élément sécurisé est connecté au processeur non sécurisé, le procédé comprenant des étapes consistant à : installer dans le processeur non sécurisé un module applicatif personnalisé configuré pour gérer une liaison sécurisée avec l'élément sécurisé, transmettre à l'élément sécurisé, des premières données d'authentification du module applicatif personnalisé, sous forme chiffrée de manière à assurer la confidentialité des premières données d'authentification, les première données d'authentification comprenant une première signature (IIC) du code exécutable du module applicatif personnalisé, générer et transmettre par le module applicatif personnalisé à l'élément sécurisé des secondes données d'authentification du module applicatif personnalisé, les secondes données d'authentification comprenant une seconde signature du code exécutable du module applicatif personnalisé, calculée par le module applicatif personnalisé, si l'élément sécurisé détermine que les première et seconde signatures sont identiques, établir une liaison de communication sécurisée, utilisant la connexion entre le processeur non sécurisé et l'élément sécurisé, la liaison de communication étant sécurisée à l'aide d'une clé de session (SSK) partagée entre le module applicatif personnalisé et l'élément sécurisé, et générée en utilisant les premières ou secondes données d'authentification, transmettre une commande par le processeur non sécurisé à l'élément sécurisé, la commande étant fournie par une application installée dans le processeur non sécurisé, et exécuter la commande par l'élément sécurisé uniquement si la commande est transmise par la liaison de communication sécurisée.

Selon un mode de réalisation, le procédé comprend des étapes consistant à : calculer par le module applicatif personnalisé les secondes données d'authentification en appliquant une fonction cryptographique à la seconde signature.

Selon un mode de réalisation, la commande est exécutée par l'élément sécurisé seulement si elle est autorisée pour une application destinatrice installée dans l'élément sécurisé, et/ou pour une application émettrice de la commande, installée dans le processeur non sécurisé, d'après une liste de contrôle d'accès mémorisée par l'élément sécurisé.

Selon un mode de réalisation, chaque application installée dans le processeur non sécurisé, susceptible de communiquer avec l'élément sécurisé, comprend le module applicatif personnalisé.

Selon un mode de réalisation, le procédé comprend des étapes de transmission et d'installation dans le processeur non sécurisé d'un nouveau module applicatif personnalisé de gestion de communications avec l'élément sécurisé ou de nouvelles données de personnalisation du module applicatif personnalisé, et de transmission à l'élément sécurisé de nouvelles premières données d'authentification du nouveau module applicatif personnalisé ou du module applicatif personnalisé associé avec les nouvelles données de personnalisation, ces étapes étant exécutées soit périodiquement, soit en cas d'erreur rencontrée par l'élément sécurisé lors de l'établissement de la liaison de communication sécurisée ou lors du traitement d'une commande émise par une application du processeur non sécurisé.

Selon un mode de réalisation, le module applicatif personnalisé est généré par un serveur de confiance, et les premières données d'authentification du module applicatif personnalisé sont transmises par le serveur de confiance à l'élément sécurisé par une liaison sécurisée établie entre l'élément sécurisé et une adresse du serveur de confiance.

Selon un mode de réalisation, l'adresse du serveur est fournie à l'élément sécurisé lors d'un traitement de personnalisation de l'élément sécurisé, effectué à partir de données d'identification d'un utilisateur.

Selon un mode de réalisation, la transmission des premières données d'authentification entre le serveur de confiance et l'élément sécurisé est précédée d'étapes d'authentification mutuelle entre le serveur de confiance et l'élément sécurisé.

Selon un mode de réalisation, l'établissement d'une liaison de communication sécurisée est effectué exclusivement pour une seule application installée dans le processeur non sécurisé, l'établissement d'une autre liaison de communication sécurisée étant effectué pour une autre application installée dans le processeur non sécurisé.

Selon un mode de réalisation, la liaison de communication sécurisée est établie pour une durée limitée ou pour transmettre un nombre limité de commandes.

Des modes de réalisation concernent également un système comprenant un terminal mobile et un serveur de confiance, le terminal mobile comprenant un processeur non sécurisé, des circuits de communication pour communiquer avec de serveur de confiance, et un élément sécurisé connecté au processeur non sécurisé, le système étant configuré pour exécuter le procédé tel que précédemment défini.

Selon un mode de réalisation, le processeur non sécurisé est un processeur d'un ordinateur ou d'un appareil portable comprenant les circuits de communication pour communiquer avec un serveur distant, et l'élément sécurisé est un processeur de sécurisé ou un environnement sécurisé mis en oeuvre dans un processeur.

Des modes de réalisation concernent également un élément sécurisé comportant une interface de connexion pour se connecter dans un terminal mobile à un processeur non sécurisé, l'élément sécurisé étant configuré pour : recevoir des premières données d'authentification d'un module applicatif personnalisé, émises par un serveur de confiance, sous forme chiffrée de manière à assurer la confidentialité des premières données d'authentification, les première données d'authentification comprenant une première signature du code exécutable du module applicatif personnalisé, recevoir des secondes données d'authentification du module applicatif personnalisé, émises par le processeur non sécurisé, les secondes données d'authentification comprenant une seconde signature du code exécutable du module applicatif personnalisé, calculée par le module applicatif personnalisé, si les première et seconde signatures sont identiques, établir avec le module applicatif personnalisé installé dans le processeur non sécurisé, une liaison de communication sécurisée utilisant la connexion avec le processeur non sécurisé, la liaison de communication étant sécurisée à l'aide d'une clé de session partagée avec le module applicatif personnalisé et générée en utilisant les premières ou secondes données d'authentification, recevoir une commande fournie par une application installée dans le processeur non sécurisé, et exécuter la commande uniquement si la commande est transmise par la liaison de communication sécurisée.

Selon un mode de réalisation, l'élément sécurisé est configuré pour exécuter la commande seulement si elle est autorisée pour une application destinatrice de la commande, installée dans l'élément sécurisé, et/ou une application émettrice de la commande, installée dans le processeur non sécurisé, d'après une liste de contrôle d'accès mémorisée par l'élément sécurisé.

Selon un mode de réalisation, l'élément sécurisé est configuré pour émettre une commande d'installation d'un nouveau module applicatif personnalisé de gestion de communications dans le processeur non sécurisé connecté à l'élément sécurisé, et recevoir de nouvelles premières données d'authentification du nouveau module applicatif personnalisé, en cas d'erreur rencontrée lors de l'établissement de la liaison de communication sécurisée ou lors du traitement d'une commande reçue.

Selon un mode de réalisation, l'élément sécurisé est configuré pour recevoir les premières données d'authentification du module applicatif personnalisé émises d'un serveur de confiance par une liaison sécurisée établie avec une adresse du serveur de confiance, à la suite d'une authentification mutuelle avec le serveur de confiance.

Selon un mode de réalisation, l'élément sécurisé est configuré pour conserver active chaque liaison de communication sécurisée pendant une durée limitée.

Des exemples de réalisation de l'invention seront décrits dans ce qui suit, à titre non limitatif en relation avec les figures jointes parmi lesquelles :
la figure 1 représente schématiquement un système pouvant mettre en oeuvre un procédé de contrôle d'accès, selon un mode de réalisation,
la figure 2 est un schéma fonctionnel du système, selon un mode de réalisation,
les figures 3 à 5 représentent schématiquement des séquences d'étapes du procédé de contrôle d'accès, selon des modes de réalisation,
la figure 6 représente la structure d'une liste de contrôle d'accès utilisée par le système,
la figure 7 représente la structure d'une liste de données d'application installées dans le système,
la figure 8 représente schématiquement une séquence d'étapes selon un autre mode de réalisation.

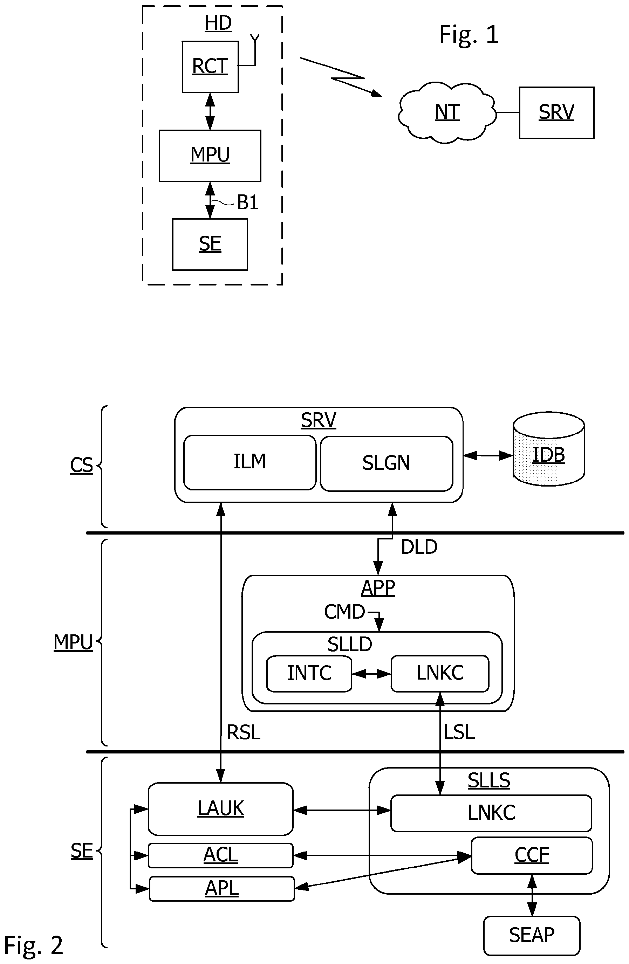

La figure 1 représente un système comprenant un dispositif hôte MPU connecté à un élément sécurisé SE, le dispositif MPU pouvant se connecter à des serveurs distants. Le dispositif hôte MPU et l'élément sécurisé SE peuvent être intégrés dans un appareil portatif HD tel qu'un téléphone mobile, ou un ordinateur de bureau. Le dispositif MPU peut être un processeur de l'appareil HD, par exemple le processeur principal ou le processeur en charge de la gestion des communications de l'appareil avec un ou plusieurs réseaux de communication NT sans fil et/ou filaires (par exemple GSM, 3G, LTE, WIFI). A cet effet, le processeur MPU est connecté à des circuits de communication RCT. L'appareil HD peut se connecter au serveur SRV au moyen d'un ou plusieurs des réseaux NT. L'appareil HD ou l'élément SE peuvent également comprendre un dispositif de communication à champ proche ou NFC (Near Field Communication) (non représenté) pour conduire des transactions à champ proche.

L'élément sécurisé SE peut comprendre un processeur sécurisé, comme une carte SIM (Subscriber Identity Module), une carte micro-SD (micro Secure Digital card), un module UICC, ou plus généralement un circuit intégré sécurisé. L'élément SE est connecté au processeur MPU par une liaison B1 qui peut être de type ISO 7816, SWP ("Single Wire Protocol") ou I2C (Inter Integrated Circuit).

Pour la mise en oeuvre du procédé de contrôle d'accès, selon un mode de réalisation, le dispositif MPU peut se connecter à un serveur de confiance SRV qui peut être distant.

La figure 2 est un schéma fonctionnel du système de la figure 1. Sur la figure 2, le serveur SRV situé dans un espace distant CS, assure des fonctions d'établissement SLGN et de gestion d'intégrité ILM d'une liaison sécurisée avec le dispositif MPU, et d'une liaison sécurisée avec l'élément SE.

Le dispositif MPU comprend un système d'exploitation et une ou plusieurs applications installées APP. Chaque application APP est connue du serveur SRV. Chaque application APP comprend un module de gestion SLLD d'une liaison sécurisée SLS établie avec l'élément SE. Le module SLLD comprend une fonction LAUT d'établissement de la liaison sécurisée SLS avec l'élément SE, et une fonction de calcul d'intégrité INTC.

L'élément SE comprend un module de gestion SLLS de la liaison sécurisée SLS, une fonction d'authentification et de contrôle d'intégrité LAUK, une table de données d'application APL, et une liste de contrôle d'accès ACL. Le module SLLS comprend un module d'interface CCF avec des applications ou applets SEAP installés dans l'élément SE, et un module de contrôle LNKC des liaisons sécurisées SLS établies avec les applications APP installées dans le dispositif MPU.

La table APL contient les identifiants d'applications APP installées dans le dispositif MPU, chacun de ces identifiants pouvant être associé à des données d'authentification (clé publique, certificat, signature du code exécutable). La liste ACL contient les identifiants d'applications APP installées dans le dispositif MPU, chacun de ces identifiants étant associé à un ou plusieurs identifiants d'application SEAP installée dans l'élément SE, et à une liste de commandes destinées à l'application SEAP, autorisées ou interdites pour l'application APP. Dans une variante, la liste ACL peut comprendre des identifiants d'applications interdites.

Le serveur SRV gère le contenu d'une base de données IDB mémorisant des informations relatives à des éléments sécurisés SE susceptibles de se connecter au serveur SRV, comme des clés publiques et des certificats (tels que ceux du module SLLS installé dans l'élément SE), ainsi qu'une liste d'applications SEAP installées dans chaque élément sécurisé. La base de données IDB mémorise également des données de personnalisation (clés publiques, certificats) relatives à des applications (APP) installées dans des dispositifs hôtes (MPU) susceptibles de communiquer avec le serveur SRV. La base de données IDB mémorise également l'existence de liens d'appairage entre les applications APP et les éléments sécurisés SE connectés aux dispositifs MPU dans lesquels sont installées les applications. La base de données IDB mémorise également pour chaque application APP une liste ACL contenant les identifiants d'applications SEAP installées dans les éléments SE, avec lesquelles l'application APP est autorisée à communiquer, et pour chaque identifiant d'application SEAP, une liste de commandes autorisées pour l'application APP.

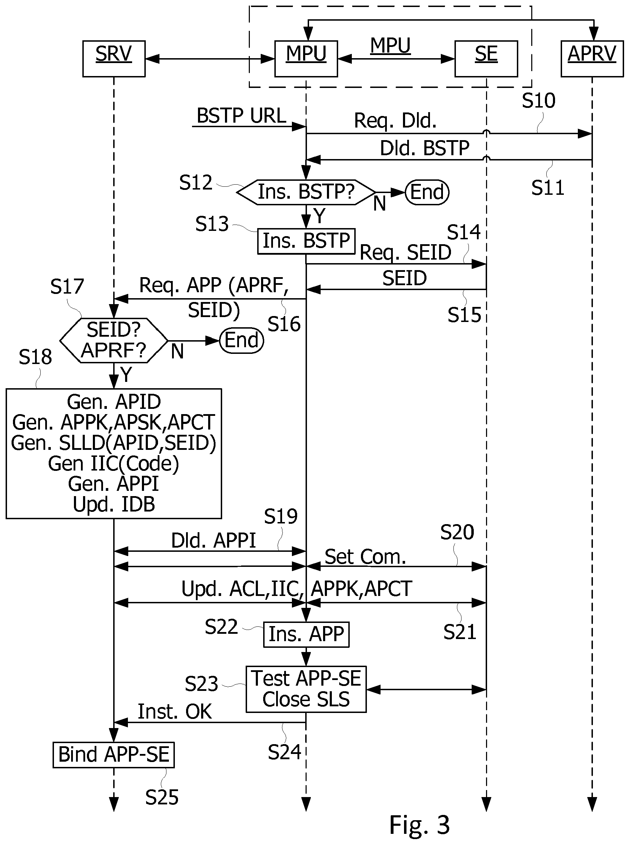

La figure 3 représente une procédure d'initialisation et de configuration du dispositif hôte MPU et de l'élément sécurisé SE. Cette procédure comprend des étapes S10 à S25. Ces étapes sont par exemple déclenchées par un événement externe pour installer une application APP dans le dispositif MPU, l'application APP pouvant fonctionner avec une ou plusieurs applications SEAP installées dans l'élément SE. Cet événement externe peut être par exemple une action de l'utilisateur du dispositif MPU qui souhaite installer l'application APP, ou bien un signal provenant du serveur SRV et indiquant que l'application APP peut être installée. Cet événement est accompagné d'une adresse de téléchargement d'un programme d'installation BSTP de l'application APP, qui est transmise au dispositif MPU. L'adresse de téléchargement peut correspondre à celle du serveur SRV ou d'un serveur associé APRV. A l'étape S10, le dispositif MPU accède à l'adresse URL reçue et demande le téléchargement du programme BSTP. Cette demande est par exemple émise par un navigateur Internet installé dans le dispositif MPU, qui la transmet au serveur APRV avec des informations relatives à l'appareil HD et notamment relatives au système d'exploitation OS du dispositif MPU et à l'élément SE. En réponse à ce message, le serveur APRV transmet à l'étape S11 un message contenant un programme d'installation BSTP. A la réception de ce message, le dispositif MPU exécute l'étape S13. Au préalable, le dispositif MPU peut demander à l'utilisateur l'autorisation d'installer le programme BSTP ainsi reçu (étape S12). Si l'utilisateur n'autorise pas l'installation du programme reçu, l'exécution des étapes S10 à S25 prend fin. A noter que l'étape S12 peut être effectuée avant l'étape S10.

A l'étape S13, le programme BSTP est installé et activé, et une liaison de communication est établie par le dispositif MPU avec l'élément SE. A l'étape S14 suivante, le programme BSTP demande à l'élément SE un identifiant SEID. A l'étape S15, l'élément SE transmet au programme BSTP les informations demandées qui peuvent comprendre des données d'état de l'élément SE. A l'étape S16, le programme BSTP transmet au serveur SRV une requête de l'application APP à installer, cette requête contenant une référence APRF de l'application APP, l'identifiant SEID, et éventuellement les données d'état reçues de l'élément SE. A l'étape S17, le serveur SRV vérifie l'existence de l'identifiant SEID et de l'application APP correspondant à la référence APRF dans la base de données IDB. Si ces informations ne figurent pas dans la base de données IDB, les étapes S18 à S25 ne sont pas exécutées. Dans le cas contraire, le serveur SRV génère des données spécifiques de l'application APP comprenant un identifiant unique d'application APID, et une paire de clés de cryptographie asymétrique APPK, APSK et/ou une clé de cryptographie symétrique pour l'application APP, ces clés pouvant être associées à un certificat APCT. Ces données d'application sont injectées dans le code du module SLLD de l'application APP, avec les données (SEID) relatives à l'élément SE transmises à l'étape S16. Une signature initiale IIC de l'application APP ainsi générée (ou seulement du module SLLD) peut ensuite être calculée par me serveur SRV. Ensuite, le serveur SRV génère un programme d'installation APPI de l'application APP incluant le module SLLD précédemment généré. Le serveur SRV procède ensuite à la mise à jour de la base de données IDB en y introduisant les données générées (APID, APSK, APPK, APCT) en association avec l'identifiant SEID.

A l'étape S19, le serveur SRV transmet le programme d'installation APPI. de l'application APP ainsi généré, en réponse au message transmis à l'étape S16. A l'étape S20 qui peut être effectuée en parallèle avec l'étape S19, le programme BSTP établit une liaison de communication sécurisée RSD (figure 2) entre le serveur et l'élément SE. La liaison sécurisée RSD peut être établie à la suite d'une authentification mutuelle du serveur SRV et de l'élément SE, par exemple à l'aide d'une clé publique connue du serveur SRV et correspondant à une clé privée mémorisée par l'élément SE, et à l'aide d'une clé publique connue de l'élément SE et correspondant à une clé privée mémorisée par le serveur SRV. Le rôle de relai de communication entre le serveur et l'élément SE est alors assuré par le programme BSTP exécuté par le dispositif MPU. La fonction LAUK de l'élément SE qui participe à cette procédure d'authentification utilise à cet effet des informations concernant le serveur SRV mémorisées par l'élément SE, et chargées lors de l'initialisation et la personnalisation de l'élément SE avec des données d'identification du titulaire de l'élément SE. Réciproquement, le serveur SRV utilise des informations lues dans la base de données IDB concernant l'élément SE, et chargées dans cette base lors de l'initialisation et la personnalisation de l'élément SE. La procédure d'authentification peut par exemple être conforme à celle spécifiée par le standard GlobalPlatform. Si la procédure d'authentification se termine par un échec, les étapes S21 à S25 ne sont pas exécutées. Dans le cas contraire, la liaison RSL a été établie (la procédure d'authentification s'est correctement déroulée). Les étapes S21 à S25 sont alors exécutées. Le serveur SRV commande à l'étape S21 la mise à jour de la liste de contrôle d'accès ACL et de la table APL mémorisées par l'élément SE en utilisant la liaison sécurisée RSL. Cette mise à jour qui est effectuée par la fonction LAUK, permet d'introduire dans la liste ACL l'identifiant APID de l'application APP et les identifiants AID d'application SEAP installées dans l'élément SE, associés à des listes CDUL de commandes CDU autorisées et/ou non autorisées pour l'application APP. La table APL est mise à jour en y introduisant les données d'authentification spécifiques relatives à l'application personnalisée APP, c'est-à-dire notamment l'identifiant APID de l'application APP, la clé secrète de cryptographie symétrique et/ou la clé publique de cryptographie asymétrique APPK de l'application APP, éventuellement le certificat APCT associé, ainsi que la signature IIC du code exécutable de l'application personnalisée APP. A noter que les données transmises par la liaison RSL sont chiffrées de manière à assurer la confidentialité des données quelle transmet, de sorte que le dispositif MPU n'a pas accès à ces données. Ces données peuvent également être signées afin de protéger leur intégrité

A l'étape S22, le programme BSTP lance l'exécution du programme d'installation APPI reçu. Le programme BSTP peut conditionner l'installation de l'application APP à une autorisation de l'utilisateur. Si l'utilisateur n'autorise pas cette installation, les étapes S22 à S25 ne sont pas exécutées. A l'étape S23, le programme BSTP active une fonction de test de l'application APP ainsi installée. Cette fonction de test engage un échange avec l'élément SE pour effectuer une authentification mutuelle et ainsi établir une communication sécurisée SLS. Les étapes S24 et S25 ne sont exécutées que si ce test s'est correctement déroulé. A l'étape S24, le programme BSTP transmet au serveur SRV un message indiquant que l'installation de l'application APP s'est correctement déroulée et que l'application est appariée avec l'élément SE. A l'étape S25, le serveur SRV reçoit ce message et valide dans la base de données IDB l'existence du lien d'appairage entre l'application APP ainsi installée dans le dispositif MPU et l'élément SE. Les étapes S18 à S25 sont exécutées à chaque installation ou mise à jour d'une application APP.

Il est a noter que des nouvelles applications SEAP peuvent être installées dans l'élément SE d'une manière connue en soi, par exemple conformément à Global Platform, d'une manière indépendante de l'installation d'applications dans le dispositif MPU. Par ailleurs, l'élément SE est configuré pour rejeter des commandes émises par une application APP installée dans le dispositif MPU, qui ne serait pas appariée avec l'élément SE, d'après la liste ACL. De cette manière, si une application appariée est remplacée par une autre application ou si une application ne possède pas de module SLLD, aucune communication ne peut avoir lieu entre l'élément SE et l'application si une authentification est requise avec cette application dans la liste ACL. Les applications installées dans dispositif MPU ne peuvent donc pas communiquer avec l'élément SE sans passer par leur module SLLD, l'application personnalisée avec son module SLLD étant appariée avec l'élément SE, si la liste ACL de l'élément SE impose que l'application soit authentifiée par l'élément SE.

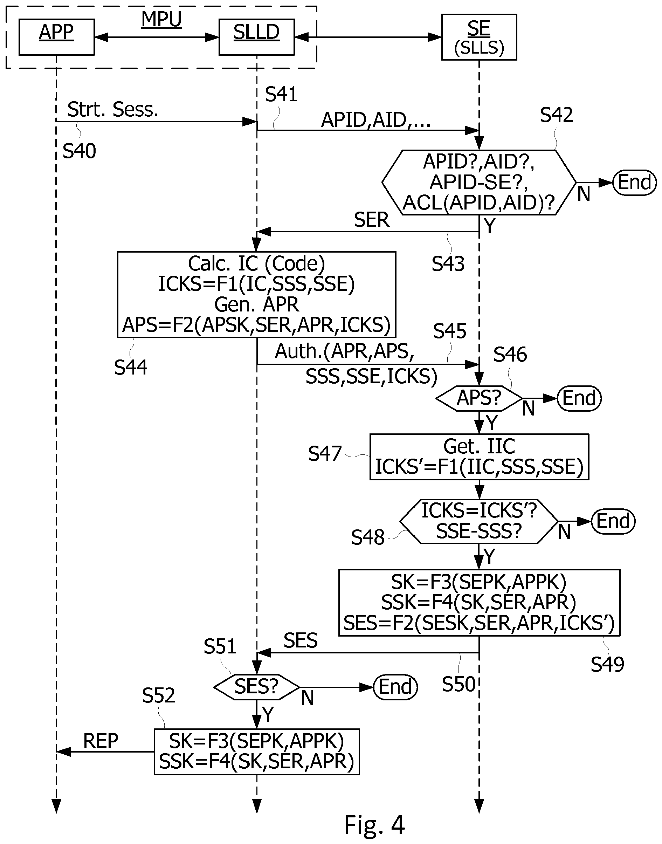

La figure 4 représente des étapes d'établissement d'une liaison sécurisée LSL entre une application APP personnalisée installée dans le dispositif MPU et l'élément SE. Cette procédure comprend des étapes S40 à S52. A l'étape S40, l'application APP émet un message de requête d'activation d'une session, par exemple par la commande APDU (Application Protocol Data Unit) SELECT AID. Ce message est traité par la fonction LAUT du module SLLD qui exécute alors l'étape S41. A l'étape S41, le module SLLD transmet à l'élément SE un message de requête contenant l'identifiant unique APID de l'application APP, et un identifiant AID d'une application SEAP visée dans l'élément SE, ainsi qu'éventuellement la clé publique APPK de l'application APP qui peut être accompagné du certificat associé APCT. Ce message de requête est reçu à l'étape S42 par le module SLLS de l'élément SE. A l'étape S42, le module SLLS effectue les vérifications suivantes :
- l'identifiant APID est apparié avec l'élément SE,
- éventuellement, la validité du certificat APCT et sa correspondance avec le certificat figurant dans la table APL,
- l'application SEAP correspondant à l'identifiant AID est installée dans l'élément SE, et enfin
- l'application correspondant à l'identifiant APID dans la liste ACL est autorisée à transmettre des commandes à l'application SEAP correspondant à l'identifiant AID.

Si l'une de ces vérifications échoue, les étapes S43 à S52 ne sont pas exécutées. Dans le cas contraire, le module SLLS engage avec le module SLLD une procédure d'authentification mutuelle (étapes S43 à S51).

A l'étape S43, le module SLLS émet en réponse un message contenant un aléa SER, et éventuellement une clé publique SEPK et un certificat SECT associé. A la réception de ce message de réponse, le module SLLD exécute les étapes S44 et S45. A l'étape S44, le module SLLD effectue les opérations suivantes :
- vérification éventuelle du certificat SECT en s'assurant qu'il est toujours valide et qu'il correspond à un certificat précédemment fourni,
- calcul d'une signature IC du code exécutable de l'application APP, par le module INTC, en mémorisant les instants de début SCS et de fin SCE de ce calcul,
- génération d'une signature de session ICKS en appliquant une fonction cryptographique F1 à la signature IC et éventuellement aux valeurs d'instants de début SCS et de fin SCE,
- génération d'un aléa APR,
- calcul d'une signature APS en appliquant une fonction cryptographique F2 à la clé privée APSK de l'application APP, aux aléas SER et APR et à la signature ICKS.

A l'étape S45, le module SLLD transmet à l'élément SE une requête d'authentification Auth. contenant les données suivantes : l'aléa APR, la signature APS et le cas échéant, les valeurs des instants de début et de fin SCS, SCE de calcul de signature IC du code de l'application APP, utilisés à l'étape S44. A la réception de la requête d'authentification, l'élément SE exécute l'étape S46. A l'étape S46, l'élément SE vérifie la signature APS en utilisant la clé publique APPK de l'application et les aléas SER et APR. Les étapes suivantes S47 à S52 ne sont exécutées que si la signature APS est correcte. A l'étape S47 le module SLLD réalise les opérations suivantes :
- lecture dans la table APL de la signature IIC mémorisée du code exécutable de l'application APP (fournie par le serveur SRV), et
- calcul d'une signature de session ICKS' en appliquant la fonction F1 à la signature IIC, et le cas échéant, aux instants de début et de fin SCS, SCE de calcul de la signature IC, reçus à l'étape S45.

A l'étape S48, l'élément SE compare la signature ICKS reçue avec la signature ICKS' calculée à l'étape S47, et compare la durée du calcul de la signature IC (écart entre les instants SCS et SCE reçus à l'étape S44) avec l'écart entre des valeurs précédemment mémorisées. Si les signatures ICKS et ICKS' ne correspondent pas, ou si la durée du calcul de la signature IC est trop différente de celle d'un calcul précédent de signature IC, les étapes suivantes S49 à S52 ne sont pas exécutées. A l'étape S49, l'élément SE effectue les opérations suivantes :
- génération d'une donnée secrète partagée SK en appliquant une fonction cryptographique F3 à la clé publique SEPK de l'élément, et à la clé publique APPK de l'application APP (fournie lors de la personnalisation de l'application APP à l'étape S21),
- génération d'une clé secrète de session SSK en appliquant une fonction cryptographique F4 à la donnée SK et aux aléas SER et APR, et
- calcul d'une signature SES en appliquant la fonction cryptographique F2 à la clé privée SESK de l'élément SE, aux aléas SER et APR, et à la signature ICKS' (=ICKS).

A l'étape S50, l'élément SE transmet la signature obtenue SES au module SLLD. A l'étape S51, le module SLLD vérifie la signature reçue SES à l'aide de la clé publique SEPK et de la signature ICKS calculée à l'étape S44. L'étape suivante S52 n'est exécutée que si la signature SES est correcte. A l'étape S52, le module SLLD réalise les calculs permettant de déterminer les clés SK et SSK à l'aide des fonctions F3 et F4 et des données SEPK, APPK, SER et APR (cf. étape S49). Le module SLLD signale ensuite à l'application APP qu'une session est activée en fournissant éventuellement un identifiant de session à utiliser par l'application APP pour accéder à l'application SEAP dans l'élément SE.

La session ainsi activée a mis en place une liaison de transmission sécurisée LSL (figure 2) entre le module SLLD de l'application APP et l'élément SE. La liaison de transmission LSL est utilisée par le module SLLD pour transmettre des commandes applicatives destinées à une application SEAP dans l'élément SE, émises par l'application APP installée dans le dispositif MPU, et pour transmettre en retour les réponses à ces commandes émises par l'application SEAP. Plusieurs sessions peuvent ainsi être activées pour permettre à différentes applications installées dans le dispositif MPU de communiquer avec une application SEAP dans l'élément SE, chaque session étant associée à une clé de session SSK respective.

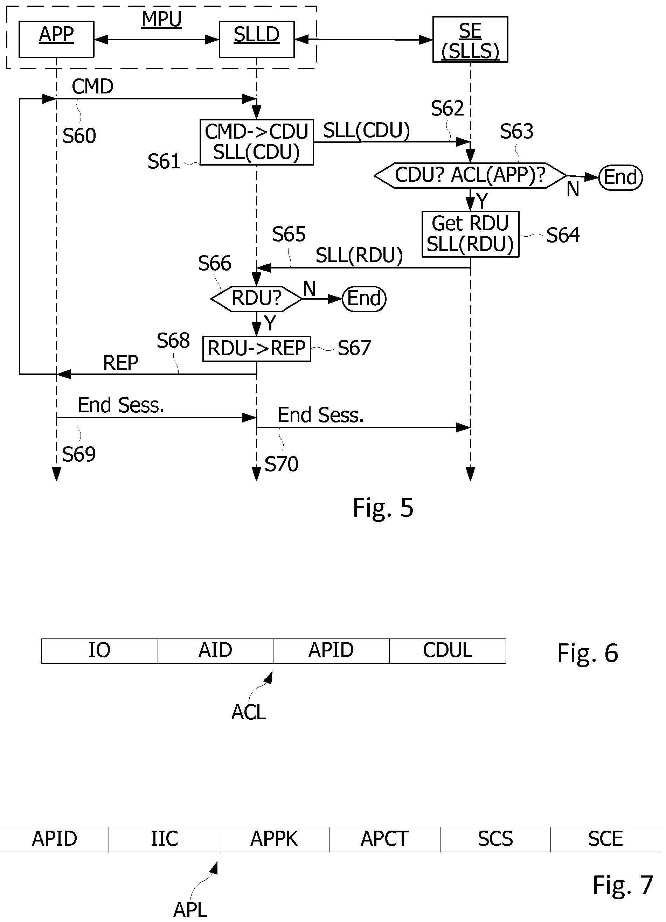

La figure 5 représente des étapes S60 à S70 d'une procédure de traitement d'une commande émise par l'application APP nécessitant une liaison sécurisée d'après la liste ACL mémorisée par l'élément SE. Le bon déroulement de cette procédure nécessite qu'une session ait été préalablement activée sur requête de l'application APP, c'est-à-dire lorsqu'une liaison LSL a été ouverte pour l'application APP. A l'étape S60, une commande CMD émise par l'application APP est transmise au module SLLD de l'application. A l'étape S61, le module SLLD reçoit cette commande, la traduit en une commande CDU compréhensible par l'élément SE, telle qu'une commande APDU (Application Protocol Data Unit selon la norme ISO 7816).

La commande traduite CDU est encapsulée en utilisant la clé de session SSK qu'il partage avec l'élément SE. A l'étape S62 qui suit, le module SLLD transmet la commande encapsulée SLL(CDU) à l'élément SE. Cette commande encapsulée est reçue par l'élément SE à l'étape S63. L'élément SE effectue alors les opérations suivantes :
- extraction de la commande CDU de la commande encapsulée SLL(CDU) à l'aide de la clé de session SSK, et
- vérification à l'aide de la table ACL que l'élément SE est autorisé à exécuter la commande CDU, en fonction de la commande, de l'application APP correspondant à l'identifiant APID utilisé lors de l'établissement de la liaison LSL, et de l'application SEAP destinatrice de la commande, telle que mentionnée par l'identifiant figurant dans la commande CDU.

Il est à noter que si la commande n'a pas été encapsulée avec la clé de session SSK utilisée par l'élément SE, elle ne pourra pas être extraite correctement et donc ne correspondra pas à une commande autorisée pour une application SEAP installée dans l'élément SE.

Si d'après la liste ACL, la commande CDU est autorisée pour l'application APP et pour l'application SEAP visée dans la commande, l'élément SE exécute les étapes S64 à S66. A l'étape S64, l'élément SE effectue les opérations suivantes :
- exécution de la commande CDU et récupération d'une réponse RDU à la commande, et
- encapsulation de la réponse RDU à l'aide de la clé de session SSK.

A l'étape S65, l'élément SE transmet la réponse encapsulée SLL(REP) à l'application APP. A l'étape S66, le module SLLD de l'application APP reçoit la réponse encapsulée et en extrait la réponse RDU à l'aide de la clé de session SSK. A l'étape S66, si la réponse RDU ainsi obtenue ne correspond pas à une valeur possible, les étapes suivantes S67 et S68 ne sont pas exécutées. Si la réponse CDU présente une valeur possible, elle peut être traduite si nécessaire en un message de réponse REP (étape S67). Le message de réponse REP obtenu est ensuite envoyé à l'application APP à l'étape S68. Le module SLLD est alors prêt à recevoir une nouvelle commande de l'application APP. L'application APP peut alors émettre une nouvelle commande ou mettre fin à la session en envoyant une commande à cet effet au module SLLD (étape S69). La commande de fin de session est retransmise par le module SLLD à l'élément SE à l'étape S70.

Si à l'étape S63, la commande CDU n'est pas autorisée pour l'application identifiée dans la commande, ou si à l'étape S48, l'élément SE rejette la validité de la signature ICKS ou de la durée SCE-SCS, l'élément SE peut prendre toute mesure appropriée. Ainsi, l'élément SE peut simplement émettre un message de rejet de la commande au module SLLD (à l'étape S63). Le module SLLD signale alors ce rejet à l'application APP, et se met en attente d'une nouvelle commande. L'élément SE peut également mettre fin à la session (étape S63), en transmettant un message à cet effet au module SLLD et/ou en refusant toute nouvelle commande pour la même session, une nouvelle session devant alors être activée en exécutant les étapes S40 à S52. L'élément SE peut également refuser toute ouverture de session avec l'application APP correspondant à l'identifiant APID, ou directement demander au serveur SRV de charger une nouvelle application personnalisée (nouveaux code exécutable, identifiant APID, paires de clés publique et privée APSK, APPK, certificat APCT et signature du code exécutable IC) dans le dispositif MPU, en remplacement de l'application APP. Dans ce cas, les étapes S18 à S25 doivent être à nouveau exécutées. La base de données IDB sera alors mise à jour avec les nouvelles données de l'application APP. Un compteur peut être utilisé pour numéroter chaque commande CDU transmise par un canal LSL. L'utilisation d'un canal peut alors être limitée à la transmission un certain nombre de commandes. Il peut être également prévu que le serveur SRV déclenche le rechargement, par exemple périodiquement, d'une nouvelle application personnalisée (nouveaux code, identifiant, paires de clés publique et privée et certificat) dans le dispositif MPU, pour chaque application installée en déclenchant l'exécution des étapes S18 à S25.

La figure 6 représente un exemple de structure de la liste ACL. Sur la figure 6, la liste de contrôle d'accès ACL peut comprendre plusieurs lignes comportant chacune un identifiant AID d'application SEAP installée dans l'élément SE, un identifiant APID d'application APP installée dans le dispositif MPU, et une liste CDUL de commandes CDU autorisées et/ou non autorisées. Chaque ligne de la liste ACL peut également comprendre un identifiant d'interface de communication (ISO 7816, RF, SWP) si l'élément SE en comporte plusieurs. Si aucun identifiant d'application APP n'est spécifié dans le champ APID, n'importe quelle application APP peut communiquer avec l'application SEAP mentionnée dans le champ AID, sans établir une liaison sécurisée LSL, et donc sans authentification mutuelle. Si une commande est destinée à une application SEAP ne figurant pas dans la liste ACL, le module SLLS transmet la commande CDU à l'application SEAP sans effectuer de filtrage. Si une commande est destinée à une application SEAP figurant dans la liste ACL, le module SLLS transmet la commande à l'application SEAP seulement si la liste ACL comprend une ligne contenant l'identifiant AID de l'application SEAP, un champ APID présentant une valeur égale à "ALL" ou à l'identifiant APID de l'application APP émettrice de la commande, et un champ CDUL égal à "ALL" ou bien contenant ou n'excluant pas la commande CDU. Un exemple de liste ACL est donné en Annexe I.

La figure 7 représente un exemple de structure de la table APL. Sur la figure 7, la table APL comprend pour chaque application APP installée dans le dispositif MPU et susceptible de communiquer avec l'élément SE, l'identifiant APID de l'application, la signature IC de son code, sa clé publique APPK, le certificat APCT de la clé publique, et les instants de début et de fin reçus de l'application reçus lors d'une session précédente ou fournis par le serveur SRV si aucune session n'a encore été établie.

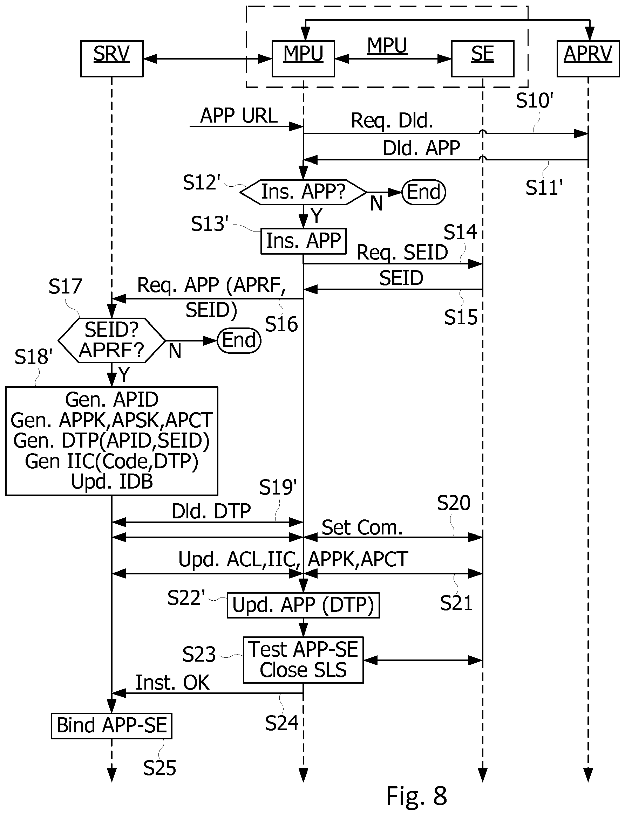

La figure 8 représente une alternative à la séquence d'étapes de la figure 3 dans laquelle seules les étapes S10 à S13, S18, S19 et S22 ont été modifiées et remplacées par des étapes S10' à S13', S18', S19' et S22'. Dans cette séquence d'étapes, les données d'authentification du module SLLD de l'application sont fournies par le serveur SRV à l'application APP qui se présente alors sous une forme générique, c'est-à-dire non personnalisée, une fois que celle-ci est installée dans le dispositif MPU. Ces données d'authentification peuvent ensuite être régénérées par le serveur SRV en cas de besoin. Aux étapes S10' et S11', l'application requise APP générique, est directement téléchargée par le dispositif MPU à partir du serveur APRV. Aux étapes S12' et S13', l'application téléchargée APP n'est installée que si l'utilisateur en donne l'autorisation. L'étape S18' diffère de l'étape S18 en ce qu'un ensemble de données DTP est constitué en y rassemblant les données qui servaient dans l'étapes S18 à particulariser l'application APP, c'est-à-dire notamment, les identifiants uniques de l'application APID et de l'élément sécurisé SEID, ainsi que les clés APSK, APPK, et le certificat APCT. La signature du code IIC de l'application est calculée sur le code de l'application générique et sur l'ensemble DTP. A l'étape S19', l'ensemble de données DTP est transmis au dispositif MPU, et à l'étape S22', l'application APP est mise à jour avec l'ensemble de données DTP. La séquence d'étapes de la figure 8 permet d'effectuer une simple mise à jour de l'application APP au lieu de réinstaller l'application APP (figure 3) à chaque fois qu'une nouvelle application personnalisée doit être installée dans le dispositif MPU. Comme précédemment, les étapes S18' à S25 sont exécutées à chaque fois que l'application APP doit être mise à jour.

Une attaque de l'élément SE peut consister à récupérer une clé de session SSK encore active et l'utiliser pour accéder à la liaison sécurisée LSL, et ainsi communiquer avec l'élément SE. Toutefois, cette attaque se trouve limitée dans son étendue aux commandes autorisées dans la liste ACL. Cette attaque peut être au moins en partie contrée en évitant de stocker la clé de session SSK dans le dispositif MPU, et donc en la recalculant à l'aide de la fonction F4 (exécution de l'étape S52) à chaque fois qu'elle doit être utilisée par le module SLLD de l'application APP (aux étapes S61 et S66).

Une autre attaque peut consister à récupérer le certificat APCT, et les clés publique APPK et privée APSK de l'application APP pour générer une autre session. Toutefois, la génération d'une session peut nécessiter de disposer de la signature IC du code exécutable de l'application APP installée dans le dispositif MPU, telle que mémorisée par l'élément SE et le serveur SRV. A ce sujet, il est à noter que cette signature n'est pas mémorisée par le dispositif MPU ou transmise en clair par ce dernier. Il est donc nécessaire de pouvoir la calculer et donc de disposer du module INTC de calcul de signature de l'application APP, ou de connaître l'algorithme à la base de ce calcul. Le risque de découverte de cet algorithme peut être réduit en réinstallant périodiquement l'application APP dans le dispositif MPU (exécution des étapes S18 ou S18' à S25), et éventuellement en changeant cet algorithme ou une donnée secrète utilisée par cet algorithme dans chaque nouvelle application APP.

Il est à noter qu'une attaque ne peut concerner qu'un système associant un dispositif MPU et un élément SE donnés, du fait que l'application APP est spécifique à chaque système MPU-SE.

Il apparaîtra clairement à l'homme de l'art que la présente invention est susceptible de diverses variantes de réalisation et diverses applications. En particulier, l'invention n'est pas limitée à l'utilisation d'une signature du code exécutable de l'application APP pour permettre à l'élément SE d'authentifier cette application. En effet, dans une variante certes moins robuste, cette signature peut ne porter que sur une partie du code exécutable de l'application, par exemple seulement sur le module SLLD, ou seulement sur une donnée ou plusieurs données variables d'une instance à l'autre de l'application APP personnalisée, comme le certificat CT ou la clé publique APPK ou privée APSK.

Le module SLLD dans chaque application APP installée dans le dispositif MPU peut être remplacé par une application spécifique configurée pour établir des liaisons sécurisées LSL avec l'élément SE pour les autres applications installées dans l'élément MPU, et ayant seule le droit d'établir de telles liaisons sécurisées. De cette manière, il peut ne pas être nécessaire d'avoir à personnaliser chaque application APP. Dans ce cas, l'application spécifique peut être réinstallée plusieurs fois, notamment à chaque fois qu'une erreur est rencontrée lors de l'exécution par l'application spécifique pour une application APP, des étapes de vérification figurant notamment dans les figures 4 et 5.

Par ailleurs, la liste ACL est optionnelle, toutes les commandes étant alors autorisées pour toutes les applications installées dans l'élément SE dès lors qu'une liaison sécurisée LSL a été établie entre une application APP et l'élément SE et que la commande est transmise par la liaison LSL. En outre, la liste ACL peut définir chaque commande autorisée pour chaque application SEAP installée dans l'élément SE, ou simplement chaque commande autorisée indépendamment de l'application SEAP.

**ANNEXE I faisant partie intégrante de la description**

| N° | I/O | AID | APID | CDUL | Commentaire |
|---|---|---|---|---|---|
| 1 | IO1 | AID1 | APID1 | APDUm, APDUn | L'application APID1 peut seulement demander l'exécution des commandes APDUm et APDUn à l'applet AIP1 par l'interface IO1 |
| 2 | IO1 | AID1 | APID2 | ALL | L'application APID2 peut demander l'exécution de toute commande à l'applet AID1 par l'interface IO1 |
| 3 | IO1 | AID1 | APID3 | *APDUm, *APDUn | L'application APID3 peut demander l'exécution de toute commande sauf APDUm et APDUn à l'applet AID1 par l'interface IO1 |
| 4 | IO2 | AID2 | NONE | / | Aucune application n'est autorisée à accéder à l'applet AID2 par l'interface IO2 |
| 5 | IO3 | AID3 | ALL | ALL | N'importe quelle application peut demander l'exécution de toute commande à l'applet AID3 par l'interface IO3 |
| 6 | IO3 | AID4 | ALL | APDUm, APDUn | N'importe quelle application peut accéder à l'applet AID4 par l'interface IO3, mais seules les commandes APDUm et APDUn sont autorisées |
| 7 | IO3 | AID5 | ALL | *APDUm, *APDUn | N'importe quelle application peut accéder à l'applet AID4 par l'interface IO3, mais les commandes APDUm et APDUn sont interdites |

## Revendications

1. Procédé d'exécution par un élément sécurisé (SE) d'une commande transmise par un processeur non sécurisé (MPU) d'un terminal mobile (HD) dans lequel l'élément sécurisé est connecté au processeur non sécurisé,
le procédé comprenant des étapes consistant à :
installer dans le processeur non sécurisé un module applicatif personnalisé (SLLD) configuré pour gérer une liaison sécurisée avec l'élément sécurisé,
transmettre à l'élément sécurisé des premières données d'authentification (APPK, APCT, IIC) du module applicatif personnalisé, sous forme chiffrée de manière à assurer la confidentialité des premières données d'authentification, les première données d'authentification comprenant une première signature (IIC) du code exécutable du module applicatif personnalisé,
générer et transmettre par le module applicatif personnalisé à l'élément sécurisé des secondes données d'authentification (APR, APS, ICKS) du module applicatif personnalisé, les secondes données d'authentification comprenant une seconde signature (IC) du code exécutable du module applicatif personnalisé, calculée par le module applicatif personnalisé,
si l'élément sécurisé détermine que les première et seconde signatures sont identiques, établir une liaison de communication sécurisée (LSL) utilisant la connexion entre le processeur non sécurisé et l'élément sécurisé, la liaison de communication étant sécurisée à l'aide d'une clé de session (SSK) partagée entre le module applicatif personnalisé et l'élément sécurisé, et générée en utilisant les premières ou secondes données d'authentification,
transmettre une commande (CMD) par le processeur non sécurisé à l'élément sécurisé, la commande étant fournie par une application (APP) installée dans le processeur non sécurisé, et
exécuter la commande par l'élément sécurisé uniquement si la commande est transmise par la liaison de communication sécurisée.

2. Procédé selon la revendication 1, comprenant une étape consistant à :
calculer par le module applicatif personnalisé les secondes données d'authentification (ICKS, APS) en appliquant une fonction cryptographique (F1, F2) à la seconde signature.

3. Procédé selon la revendication 1 ou 2, dans lequel la commande (CMD) est exécutée par l'élément sécurisé (SE) seulement si elle est autorisée pour une application destinatrice (SEAP) installée dans l'élément sécurisé, et/ou pour une application (APP) émettrice de la commande, installée dans le processeur non sécurisé (MPU), d'après une liste de contrôle d'accès (ACL) mémorisée par l'élément sécurisé.

4. Procédé selon l'une des revendications 1 à 3, comprenant des étapes de transmission et d'installation dans le processeur non sécurisé (MPU) d'un nouveau module personnalisé (SLLD) de gestion de communications avec l'élément sécurisé (SE) ou de nouvelles données de personnalisation du module applicatif personnalisé, et de transmission à l'élément sécurisé de nouvelles premières données d'authentification (APPK, APCT, IIC) du nouveau module applicatif personnalisé ou du module applicatif personnalisé associé avec les nouvelles données de personnalisation, ces étapes étant exécutées soit périodiquement, soit en cas d'erreur rencontrée par l'élément sécurisé lors de l'établissement de la liaison de communication sécurisée (LSL) ou lors du traitement d'une commande (CMD) émise par l'application (APP) installée dans le processeur non sécurisé (MPU).

5. Procédé selon l'une des revendications 1 à 4, dans lequel le module applicatif personnalisé (SLLD) est généré par un serveur de confiance (SRV), et les premières données d'authentification (APPK, APCT, IIC) du module applicatif personnalisé sont transmises par le serveur de confiance à l'élément sécurisé (SE) par une liaison sécurisée (RSL) établie entre l'élément sécurisé et une adresse (BSTP URL) du serveur de confiance.

6. Procédé selon la revendication 5, dans lequel l'adresse (BSTP URL) du serveur (SRV) est fournie à l'élément sécurisé (SE) lors d'un traitement de personnalisation de l'élément sécurisé, effectué à partir de données d'identification d'un utilisateur.

7. Procédé selon la revendication 5 ou 6, dans lequel la transmission des premières données d'authentification (APPK, APCT, IIC) entre le serveur de confiance (SRV) et l'élément sécurisé (SE) est précédée d'étapes d'authentification mutuelle entre le serveur de confiance et l'élément sécurisé.

8. Procédé selon l'une des revendications 1 à 7, dans lequel l'établissement d'une liaison de communication sécurisée (LSL) est effectué exclusivement pour une seule application (APP) installée dans le processeur non sécurisé (MPU), l'établissement d'une autre liaison de communication sécurisée (LSL) étant effectué pour une autre application (APP) installée dans le processeur non sécurisé, chaque application installée dans le processeur non sécurisé, susceptible de communiquer avec l'élément sécurisé (SE) pouvant comprendre le module applicatif personnalisé (SLLD).

9. Procédé selon l'une des revendications 1 à 8, dans lequel la liaison de communication sécurisée (LSL) est établie pour une durée limitée ou pour transmettre un nombre limité de commandes.

10. Système comprenant un terminal mobile (HD) et un serveur de confiance (SRV), le terminal mobile comprenant un processeur non sécurisé (MPU), des circuits de communication (RCT) pour communiquer avec de serveur de confiance, et un élément sécurisé (SE) connecté au processeur non sécurisé,
**caractérisé en ce qu'**il est configuré pour exécuter le procédé selon l'une des revendications 1 à 9.

11. Système selon la revendication 10, dans lequel le processeur non sécurisé (MPU) est un processeur d'un ordinateur ou d'un appareil portable (HD) comprenant les circuits de communication (RCT) pour communiquer avec un serveur distant, et l'élément sécurisé (SE) est un processeur de sécurisé ou un environnement sécurisé mis en oeuvre dans un processeur.

12. Elément sécurisé comportant une interface de connexion pour se connecter dans un terminal mobile (HD) à un processeur non sécurisé (MPU), l'élément sécurisé étant configuré pour :
recevoir des premières données d'authentification (APPK, APCT, IIC) d'un module applicatif personnalisé (SLLD), émises par un serveur de confiance (SRV), sous forme chiffrée de manière à assurer la confidentialité des premières données d'authentification, les première données d'authentification comprenant une première signature (IIC) du code exécutable du module applicatif personnalisé,
recevoir des secondes données d'authentification (ICKS, APS) du module applicatif personnalisé, émises par le processeur non sécurisé, les secondes données d'authentification comprenant une seconde signature (IC) du code exécutable du module applicatif personnalisé, calculée par le module applicatif personnalisé,
si les première et seconde signatures sont identiques, établir avec le module applicatif personnalisé installé dans le processeur non sécurisé, une liaison de communication sécurisée (LSL) utilisant la connexion avec le processeur non sécurisé, la liaison de communication étant sécurisée à l'aide d'une clé de session partagée avec le module applicatif personnalisé et générée en utilisant les premières ou secondes données d'authentification,
recevoir une commande (CMD) fournie par une application (APP) installée dans le processeur non sécurisé, et
exécuter la commande uniquement si la commande est transmise par la liaison de communication sécurisée.

13. Elément sécurisé selon la revendication 12, configuré pour exécuter la commande (CMD) seulement si elle est autorisée pour une application destinatrice (SEAP) de la commande, installée dans l'élément sécurisé, et/ou une application (APP) émettrice de la commande, installée dans le processeur non sécurisé (MPU), d'après une liste de contrôle d'accès (ACL) mémorisée par l'élément sécurisé.

14. Elément sécurisé selon l'une des revendications 12 et 13, configuré pour émettre une commande d'installation d'un nouveau module applicatif personnalisé (SLLD) de gestion de communications dans le processeur non sécurisé (MPU) connecté à l'élément sécurisé (SE), et recevoir de nouvelles premières données d'authentification (APPK, APCT, IIC) du nouveau module applicatif personnalisé, en cas d'erreur rencontrée lors de l'établissement de la liaison de communication sécurisée (LSL) ou lors du traitement d'une commande (CMD) reçue.

15. Elément sécurisé selon l'une des revendications 12 à 14, configuré pour recevoir les premières données d'authentification (APPK, APCT, IIC) du module applicatif personnalisé (SLLD) émises d'un serveur de confiance (SRV) par une liaison sécurisée (RSL) établie avec une adresse (BSTP URL) du serveur de confiance, à la suite d'une authentification mutuelle avec le serveur de confiance.

## Patentansprüche

1. Verfahren zum Ausführen eines Befehls durch ein gesichertes Element (SE), der von einem ungesicherten Prozessor (MPU) eines mobilen Endgerätes (HD) übertragen wird, in dem das gesicherte Element mit dem ungesicherten Prozessor verbunden ist, wobei das Verfahren die folgenden Schritte umfasst:
Installieren eines benutzerdefinierten Anwendungsmoduls (SLLD) in dem ungesicherten Prozessor, das konfiguriert ist, um eine gesicherte Verbindung mit dem gesicherten Element zu verwalten,
Übertragen erster Authentifizierungsdaten (APPK, APCT, IIC) des benutzerdefinierten Anwendungsmoduls in verschlüsselter Form an das gesicherte Element, um die Vertraulichkeit der ersten Authentifizierungsdaten zu gewährleisten, wobei die ersten Authentifizierungsdaten eine erste Signatur (IIC) des ausführbaren Codes des benutzerdefinierten Anwendungsmoduls beinhalten,
Erzeugen und Übertragen zweiter Authentifizierungsdaten (APR, APS, ICKS) durch das benutzerdefinierte Anwendungsmodul an das gesicherte Element des benutzerdefinierten Anwendungsmoduls, wobei die zweiten Authentifizierungsdaten eine zweite Signatur (IC) des ausführbaren Codes des benutzerdefinierten Anwendungsmoduls beinhalten, die durch das benutzerdefinierte Anwendungsmodul berechnet wird,
wenn das gesicherte Element bestimmt, dass die erste und zweite Signatur identisch sind, Aufbauen einer gesicherten Kommunikationsverbindung (LSL) unter Verwendung der Verbindung zwischen dem ungesicherten Prozessor und dem gesicherten Element, wobei die Kommunikationsverbindung unter Verwendung eines Sitzungsschlüssels (SSK) gesichert wird, den das benutzerdefinierte Anwendungsmodul und das gesicherte Element gemeinsam verwenden, und der unter Verwendung der ersten oder zweiten Authentifizierungsdaten erzeugt wird,
Übertragen eines Befehls (CMD) durch den ungesicherten Prozessor an das gesicherte Element, wobei der Befehl von einer in dem ungesicherten Prozessor installierten Anwendung (APP) bereitgestellt wird, und
Ausführen des Befehls durch das gesicherte Element nur dann, wenn er über die gesicherte Kommunikationsverbindung übertragen wird.

2. Verfahren nach Anspruch 1, umfassend einen Schritt, der darin besteht: dass das benutzerdefinierte Anwendungsmodul die zweiten Authentifizierungsdaten (ICKS, APS) durch Anwenden einer kryptografischen Funktion (F1, F2) auf die zweite Signatur berechnet.

3. Verfahren nach Anspruch 1 oder 2, wobei das gesicherte Element (SE) den Befehl (CMD) nur dann ausführt, wenn er für eine in dem gesicherten Element installierte Empfangsanwendung (SEAP) und/oder für eine den Befehl ausgebende Anwendung (APP), die in dem ungesicherten Prozessor (MPU) installiert ist, gemäß einer vom gesicherten Element gespeicherten Zugriffskontrollliste (ACL) autorisiert ist.

4. Verfahren nach einem der Ansprüche 1 bis 3, umfassend die Schritte des Übertragens und Installierens eines neuen benutzerdefinierten Moduls (SLLD) im ungesicherten Prozessor (MPU) zur Verwaltung der Kommunikation mit dem gesicherten Element (SE) oder neuer Benutzerdefinitionsdaten des benutzerdefinierten Anwendungsmoduls und zur Übertragung neuer erster Authentifizierungsdaten (APPK, APCT, IIC) des neuen benutzerdefinierten Anwendungsmoduls oder des benutzerdefinierten Anwendungsmoduls, das den neuen Benutzerdefinitionsdaten zugeordnet ist, an das gesicherte Element, wobei diese Schritte entweder regelmäßig oder bei einem Fehler durchgeführt werden, zu dem es beim Aufbau der gesicherten Kommunikationsverbindung (LSL) am gesicherten Element oder bei der Verarbeitung eines Befehls (CMD) kommt, der von der Anwendung (APP) ausgegeben wird, die in dem ungesicherten Prozessor (MPU) installiert ist.

5. Verfahren nach einem der Ansprüche 1 bis 4, bei dem das benutzerdefinierte Anwendungsmodul (SLLD) von einem Trusted Server (SRV) erzeugt wird und die ersten Authentifizierungsdaten (APPK, APCT, IIC) des benutzerdefinierten Anwendungsmoduls vom Trusted Server über eine gesicherte Verbindung (RSL) an das gesicherte Element (SE) übertragen werden, die zwischen dem gesicherten Element und einer Adresse (BSTP URL) des Trusted Servers aufgebaut wird.

6. Verfahren nach Anspruch 5, wobei die Adresse (BSTP URL) des Servers (SRV) dem gesicherten Element (SE) während einer Benutzerdatenverarbeitung des gesicherten Elements bereitgestellt wird, die mit den Identifikationsdaten eines Benutzers durchgeführt wird.

7. Verfahren nach Anspruch 5 oder 6, wobei der Übertragung der ersten Authentifizierungsdaten (APPK, APCT, IIC) zwischen dem Trusted Server (SRV) und dem gesicherten Element (SE) gegenseitige Authentifizierungsschritte zwischen dem Trusted Server und dem gesicherten Element vorausgehen.

8. Verfahren nach einem der Ansprüche 1 bis 7, wobei der Aufbau einer gesicherten Kommunikationsverbindung (LSL) ausschließlich für eine einzige Anwendung (APP) durchgeführt wird, die in dem ungesicherten Prozessor (MPU) installiert ist, und wobei der Aufbau einer weiteren gesicherten Kommunikationsverbindung (LSL) für eine weitere Anwendung (APP) durchgeführt wird, die in dem ungesicherten Prozessor installiert ist, wobei jede Anwendung, die in dem ungesicherten Prozessor installiert ist und mit dem gesicherten Element (SE) kommunizieren kann, das benutzerdefinierte Anwendungsmodul (SLLD) beinhalten kann.

9. Verfahren nach einem der Ansprüche 1 bis 8, bei dem die gesicherte Kommunikationsverbindung (LSL) für eine begrenzte Zeit oder für die Übertragung einer begrenzten Anzahl von Befehlen aufgebaut wird.

10. System, umfassend ein mobiles Endgerät (HD) und einen Trusted Server (SRV), wobei das mobile Endgerät einen ungesicherten Prozessor (MPU), Kommunikationsschaltungen (RCT) zur Kommunikation mit einem Trusted Server und ein mit dem ungesicherten Prozessor verbundenes gesichertes Element (SE) umfasst, **dadurch gekennzeichnet, dass** es konfiguriert ist, um das Verfahren nach einem der Ansprüche 1 bis 9 durchzuführen.

11. System nach Anspruch 10, wobei der ungesicherte Prozessor (MPU) ein Prozessor eines Computers oder einer tragbaren Vorrichtung (HD) ist, die Kommunikationsschaltungen (RCT) zur Kommunikation mit einem entfernten Server beinhaltet, und das gesicherte Element (SE) ein gesicherter Prozessor oder eine gesicherte Umgebung ist, die in einem Prozessor implementiert ist.

12. Gesichertes Element mit einer Verbindungsschnittstelle zum Verbinden in einem mobilen Endgerät (HD) mit einem ungesicherten Prozessor (MPU), wobei das gesicherte Element konfiguriert ist, um:
erste Authentifizierungsdaten (APPK, APCT, IIC) von einem benutzerdefinierten Anwendungsmodul (SLLD) zu empfangen, die von einem Trusted Server (SRV) in verschlüsselter Form ausgegeben werden, um die Vertraulichkeit der ersten Authentifizierungsdaten zu gewährleisten, wobei die ersten Authentifizierungsdaten eine erste Signatur (IIC) des ausführbaren Codes des benutzerdefinierten Anwendungsmoduls beinhalten,
zweite Authentifizierungsdaten (ICKS, APS) vom benutzerdefinierten Anwendungsmodul zu empfangen, die vom ungesicherten Prozessor ausgegeben werden, wobei die zweiten Authentifizierungsdaten eine zweite Signatur (IC) des ausführbaren Codes des benutzerdefinierten Anwendungsmoduls beinhalten, die vom benutzerdefinierten Anwendungsmodul berechnet wird,
wenn die ersten und zweiten Signaturen identisch sind, um mit dem im ungesicherten Prozessor installierten benutzerdefinierten Anwendungsmodul eine gesicherte Kommunikationsverbindung (LSL) unter Verwendung der Verbindung mit dem ungesicherten Prozessor aufzubauen, wobei die Kommunikationsverbindung unter Verwendung eines mit dem benutzerdefinierten Anwendungsmodul gemeinsam verwendeten Sitzungsschlüssels gesichert und unter Verwendung der ersten oder zweiten Authentifizierungsdaten erzeugt wird,
Empfangen eines Befehls (CMD), der von einer im ungesicherten Prozessor installierten Anwendung (APP) bereitgestellt wird, und
den Befehl nur dann auszuführen, wenn er über die gesicherte Kommunikationsverbindung übertragen wird.

13. Gesichertes Element nach Anspruch 12, das konfiguriert ist, um den Befehl (CMD) nur dann auszuführen, wenn er für eine in dem gesicherten Element installierte Empfangsanwendung (SEAP) und/oder für eine den Befehl ausgebende Anwendung (APP), die in dem ungesicherten Prozessor (MPU) installiert ist, gemäß einer vom gesicherten Element gespeicherten Zugriffskontrollliste (ACL) autorisiert ist.

14. Gesichertes Element nach einem der Ansprüche 12 und 13, das konfiguriert ist, um einen Befehl zur Installation eines neuen benutzerdefinierten Anwendungsmoduls (SLLD) zur Verwaltung der Kommunikation in dem mit dem gesicherten Element (SE) verbundenen ungesicherten Prozessor (MPU) und zum Empfangen neuer erster Authentifizierungsdaten (APPK, APCT, IIC) vom neuen benutzerdefinierten Anwendungsmodul im Falle eines Fehlers beim Aufbau der gesicherten Kommunikationsverbindung (LSL) oder beim Verarbeiten eines empfangenen Befehls (CMD) auszugeben.

15. Gesichertes Element nach einem der Ansprüche 12 bis 14, das konfiguriert ist, um die ersten Authentifizierungsdaten (APPK, APCT, IIC) vom benutzerdefinierten Anwendungsmodul (SLLD) zu empfangen, die von einem Trusted Server (SRV) über eine gesicherte Verbindung (RSL) ausgegeben werden, die mit einer Adresse (BSTP URL) des Trusted Servers nach gegenseitiger Authentifizierung mit dem Trusted Server aufgebaut wurde.

## Claims

1. A method for executing by a secure element (SE) a command sent by a non-secure processor (MPU) of a mobile terminal (HD) in which the secure element is connected to the non-secure processor,
the method comprising steps of:
installing in the non-secure processor a customized application module (SLLD) configured for managing a secure communication link with the secure element,
transmitting to the secure element first authentication data (APPK, APCT, IIC) for authenticating the customized application module, in an encrypted manner so as to ensure the confidentiality of the first authentication data, the first authentication data comprising a first signature (IIC) of the executable code of the customized application module,
generating and transmitting from the customized application module to the secure element second authentication data (APR, APS, ICKS) for authenticating the customized application module, the second authentication data comprising a second signature (IC) of the executable code of the customized application module, calculated by the customized application module,
if the secure element determines that the first and second authentication data are consistent with each other, establishing a secure communication link (LSL) using a communication interface between the non-secure processor and the secure element, the communication link being secure using a session key (SSK) shared between the customized application module and the secure element, and generated using the first and second authentication data,
transmitting a command (CMD) from the non-secure processor to the secure element, the command being supplied by an application (APP) installed in the non-secure processor, and
executing the command by the secure element only if the command is sent via the secure communication link.

2. Method according to claim 1, comprising a step of:
calculating by the customized application module the second authentication data (ICKS, APS) by applying a cryptographic function (F1, F2) to the second signature.

3. Method according to claim 1 or 2, wherein the command (CMD) is executed by the secure element (SE) only if it is authorized for a destination application (SEAP) installed in the secure element, and/or for an issuing application (APP) issuing the command, installed in the non-secure processor (MPU), according to an access control list (ACL) stored by the secure element.

4. Method according to one of claims 1 to 3, comprising steps of transmitting and installing in the non-secure processor (MPU) a new customized module (SLLD) for managing communications with the secure element (SE) or new data for customizing the customized application module, and of transmitting to the secure element new first authentication data (APPK, APCT, IIC) for authenticating the new customized application module or the customized application module associated with the new customization data, these steps being executed either periodically, or in case of error encountered by the secure element when establishing the secure communication link (LSL) or when processing a command (CMD) issued by the application (APP) installed in the non-secure processor (MPU).

5. Method according to one of claims 1 to 4, wherein the customized application module (SLLD) is generated by a trusted server (SRV), and the first authentication data (APPK, APCT, IIC) for authenticating the customized application module are transmitted by the trusted server to the secure element (SE) via a secure link (RSL) established between the secure element and an address (BSTP URL) of the trusted server.

6. Method according to claim 5, wherein the address (BSTP URL) of the server (SRV) is provided to the secure element (SE) during a process of customizing the secure element, performed from identification data for identifying a user.

7. Method according to claim 5 or 6, wherein the transmission of the first authentication data (APPK, APCT, IIC) between the trusted server (SRV) and the secure element (SE) is preceded by mutual authentication steps between the trusted server and the secure element.

8. Method according to one of claims 1 to 7, wherein a secure communication link (LSL) is established exclusively for a single application (APP) installed in the non-secure processor (MPU), another secure communication link (LSL) being established for another application (APP) installed in the non-secure processor, each application installed in the non-secure processor , susceptible of communicating with the secure element (SE) being capable of including the customized application module (SLLD).

9. Method according to one of claims 1 to 8, wherein the secure communication link (LSL) is established for a limited duration or to transmit a limited number of commands.

10. A system comprising a mobile terminal (HD) and a trusted server (SRV), the mobile terminal comprising a non-secure processor (MPU), communication circuits (RCT) to communicate with the trusted server, and a secure element (SE) connected to the non-secure processor,
**characterized in that** it is configured to execute the method according to one of claims 1 to 9.

11. System according to claim 10, wherein the non-secure processor (MPU) is a processor of a computer or a portable device (HD) comprising the communication circuits (RCT) to communicate with a remote server, and the secure element (SE) is a secure processor or a secure environment implemented in a processor.

12. A secure element comprising a connection interface to connect in a mobile terminal (HD) to a non-secure processor (MPU), the secure element being configured to:
receive first authentication data (APPK, APCT, IIC) for authenticating a customized application module (SLLD), sent by a trusted server (SRV) in an encrypted manner so as to ensure the confidentiality of the first authentication data, the first authentication data comprising a first signature (IIC) of the executable code of the customized application module,
receive second authentication data (ICKS, APS) for authenticating the customized application module, sent by the non-secure processor, the second authentication data comprising a second signature (IIC) of the executable code of the customized application module, calculated by the customized application module,
if the first and second authentication data are consistent with each other, establish a secure communication link (LSL) with the customized application module installed in the non-secure processor, by using the connection interface with the non-secure processor, the communication link being secure using a session key shared with the customized application module and generated using the first and second authentication data,
receive a command (CMD) supplied by an application (APP) installed in the non-secure processor, and
execute the command only if the command is sent via the secure communication link.

13. Secure element according to claim 12, configured to execute the command (CMD) only if it is authorized for a destination application (SEAP) of the command, installed in the secure element, and/or an application (APP) issuing the command, installed in the non-secure processor (MPU), according to an access control list (ACL) stored by the secure element.

14. Secure element according to one of claims 12 and 13, configured to issue a command for installing a new customized application module (SLLD) for managing communications in the non-secure processor (MPU) connected to the secure element (SE), and receive new first authentication data (APPK, APCT, IIC) for authenticating the new customized application module, in case of error encountered when establishing the secure communication link (LSL) or when processing a command (CMD) received.

15. Secure element according to one of claims 12 to 14, configured to receive the first authentication data (APPK, APCT, IIC) for authenticating the customized application module (SLLD) sent from a trusted server (SRV) via a secure link (RSL) established with an address (BSTP URL) of the trusted server, following a mutual authentication with the trusted server.
